# EUROPEAN PATENT SPECIFICATION

(11) **EP 0 467 946 B1**
(45) Date of publication and mention of the grant of the patent: **22.12.1993**
(21) Application number: 90906407.3
(22) Date of filing: 06.04.1990
(51) Int. Cl.: F24F 13/12, F16K 3/22

(54) **AIRFLOW REGULATING VALVE**
LUFTFLUSSREGELUNGSVENTIL
SOUPAPE DE REGLAGE D'ECOULEMENT D'AIR

(30) Priority: 10.04.1989 SE 8901283
(43) Date of publication of application: 29.01.1992
(73) Proprietor: JOHANSSON, Folke, S-181 44 Lidingö (SE)
(72) Inventor: JOHANSSON, Folke, S-181 44 Lidingö (SE)
(74) Representative: Westerlund, Christer John Axel
(86) International application number: SE9000237
(87) International publication number: WO9012258

(56) References cited:
- GB-A- 1 436 838
- GB-A- 2 211 275
- US-A- 2 094 707
- Derwent's abstract No. N11 98 D/51, SU 813 091, publ. week 8151 (COMMUN ECON ACAD)

## Description

### Technical Field

The present invention relates to an airflow regulating valve as described in the introduction of claim 1.

### Prior Art

In regulating and adjusting the airflow in ventilating systems, valves are used which in principle consist of one or more valve blades fitted in a ventilating duct, the valve blades being fixed to a rotating axis adjustable from outside the ventilating duct. It is difficult to regulate the airflow volume with these valves. Also other types of valves, for example so-called baffle type valves, are known.

A common feature of the known types of airflow regulating valves is that in some situations a minor adjusting movement can increase or reduce the airflow to a considerable degree, and it is therefore difficult to get a stable and accurate regulation. The known valves also cause high levels of noise.

GB-A-2 211 275 describes an airflow regulating valve in a tube through which an airflow passes, and wherein the valve includes first and second, cylindrically shaped hollow bodies, of which the first body is inserted into the second body and the mantle surfaces of both the bodies have openings and at least one of the bodies is turnable relative to the other body in order to alter the relative position of the openings and thereby alter the size of the airflow through the regulating valve.

### Description of the Invention

The object of the present invention is to eliminate the disadvantages of the abovementioned known airflow regulating valves and to provide a valve which can be adjusted with high accuracy, causes only low levels of noise, is easily manufactured and installed, and can be adapted to the desired airflow characteristics, by simple design modifications (especially as regards location, size, shape and number of slits).

This object has been fulfilled by forming the first and second hollow bodies as cones.

### Description of Figures

Figure 1 is an end view of the device according to the invention, and
Figure 2 is a section plan view, taken along the line II-II of Fig. 1.

### Preferred embodiment

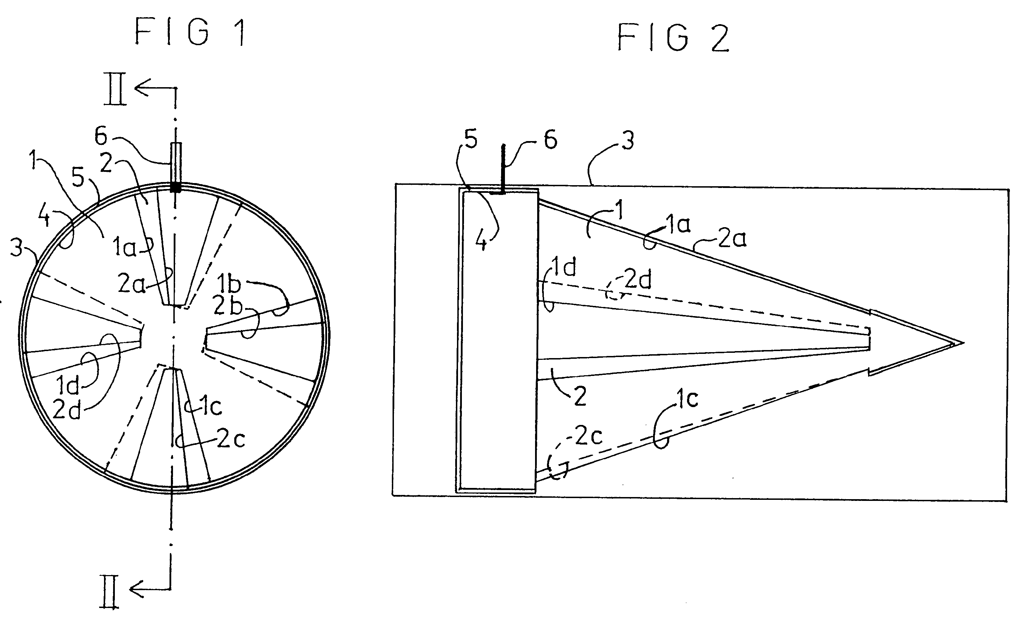

Two hollow, cone-shaped bodies 1 and 2 are combined in a tube 3 through which an airflow is led in either direction. The bodies 1 and 2 are identical, as shown in Figure 2, and each has openings in the mantle surface, in the form of four slits 1a-1d and 2a-2d, respectively, which are evenly distributed around the body. The position, shape number and size of the slits 1a-1d and 2a-2d can be changed in accordance with the airflow and regulation characteristics desired.

The cone openings of the bodies 1 and 2 have cylindrical casings 4 and 5 respectively of which the innermost 4 has a slightly smaller diameter than the outer 5 and is connected to a control lever 6 protruding through openings (not shown) in the outer casing 5 and the tube 3. The casing 5 is airtightly joined to the tube 3. Alternatively, the inner casing 4 can be joined to the tube 3 and the outer casing 5 can be turnable by using a lever similar to the control lever 6, or else both casings 4 and 5 can be fitted with control levers so that both bodies 1 and 2 can be turned relative to each other.

While only one embodiment is shown in the drawing and described above, it is to be understood that the invention is not limited to this embodiment but only by what is stated in the claims.

## Claims

1. An airflow regulating valve in a tube, through which an airflow passes, wherein the valve includes first and second, hollow bodies (1,2) of which the first body is inserted into the second body, and wherein the mantle surfaces of both the bodies have openings (1a-1d, 2a-2d) and at least one of the bodies is turnable relative to the other body in order to alter the relative position of the openings and thereby alter the size of the airflow through the regulating valve, characterized in that the first and second bodies are cone-shaped.

2. A device according to claim 1, characterized in that the openings (1a-1d, 2a-2d) are provided as slits.

3. A device according to claim 1 or 2, characterized in that a plurality of openings (1a-1d, 2a-2d) are distributed around the mantle surface of each body (1,2).

4. A device according to any of the above claims, characterized in that both of the bodies (1,2) are identical with regard to the number of openings (1a-1d, 2a-2d) and/or with regard to cone-shape.

## Patentansprüche

1. Luftflußregulierventil in einem Rohr, durch das ein Luftstrom hindurchgeht, wobei das Ventil erste und zweite Hohlkörper (1, 2) umfaßt, von denen der erste Körper in den zweiten Körper eingesetzt ist, und wobei die Manteloberflächen der beiden Körper Öffnungen (1a - 1d, 2a - 2d) aufweisen und wenigstens einer der Körper inbezug zum anderen Körper drehbar ist, um die relative Stellung der Öffnungen und dadurch die Größe des Luftstromes durch das Regulierventil zu verändern, dadurch gekennzeichnet, daß die ersten und zweiten Körper konusförmig ausgebildet sind.

2. Ventil nach Patentanspruch 1, dadurch gekennzeichnet, daß die Öffnungen (1a - 1d, 2a - 2d) als Schlitze ausgebildet sind.

3. Ventil nach Patentanspruch 1 oder 2, dadurch gekennzeichnet, daß eine Mehrzahl von Öffnungen (1a - 1d, 2a - 2d) um die Manteloberfläche jedes Körpers (1, 2) herum verteilt sind.

4. Ventil nach einem der vorhergehenden Patentansprüche, dadurch gekennzeichnet, daß beide Körper (1, 2) hinsichtlich der Anzahl von Öffnungen (1a - 1d, 2a - 2d) und/oder hinsichtlich der Konusform identisch sind.

## Revendications

1. Soupape de réglage d'écoulement d'air dans un tube, au travers duquel passe un écoulement d'air, dans laquelle la soupape comprend un premier et un second corps creux (1, 2) dont le premier corps est inséré dans le second corps, et dans laquelle les surfaces extérieures des deux corps présentent des ouvertures (1a-1d, 2a-2d) et au moins un des corps est rotatif par rapport à l'autre corps afin de modifier la position relative des ouvertures et de cette façon modifier le volume de l'écoulement d'air au travers de la soupape de réglage, caractérisée en ce que le premier et le second corps sont réalisés en forme de cônes.

2. Dispositif selon la revendication 1, caractérisé en ce que les ouvertures (1a-1d, 2a-2d) sont réalisées sous forme de fentes.

3. Dispositif selon la revendication 1 ou la revendication 2, caractérisé en ce qu'une pluralité d'ouvertures (1a-1d, 2a-2d) sont réparties autour de la surface extérieure de chaque corps (1, 2).

4. Dispositif selon l'une des revendications précédentes, caractérisé en ce que les deux corps (1, 2) sont identiques en ce qui concerne le nombre des ouvertures (1a-1d, 2a-2d) et/ou la forme conique.
